# EUROPÄISCHE PATENTSCHRIFT

(11) **EP 0 891 213 B1**
(45) Veröffentlichungstag und Bekanntmachung des Hinweises auf die Patenterteilung: **29.08.2001**
(21) Anmeldenummer: 97920573.9
(22) Anmeldetag: 01.04.1997
(51) Int. Cl.: B01D 11/04

(54) **EXTRAKTION ORGANISCHER VERBINDUNGEN AUS TENSIDHALTIGEN WÄSSRIGEN LÖSUNGEN**
EXTRACTION OF ORGANIC COMPOUNDS FROM AQUEOUS SURFACTANT-CONTAINING SOLUTIONS
EXTRACTION DE COMPOSES ORGANIQUES A PARTIR DE SOLUTIONS AQUEUSES CONTENANT DES AGENTS TENSIOACTIFS

(30) Priorität: 04.04.1996 DE 19613485
(43) Veröffentlichungstag der Anmeldung: 20.01.1999
(73) Patentinhaber: FORSCHUNGSZENTRUM JÜLICH GMBH, 52425 Jülich (DE)
(72) Erfinder: BONKHOFF, Karin, D-52070 Aachen (DE); HAEGEL, Franz-Hubert, D-52349 Düren (DE); KOWALSKI, Silke, D-40470 Düsseldorf (DE); SUBKLEW, Günter, D-52134 Herzogenrath (DE)
(86) Internationale Anmeldenummer: DE9700665
(87) Internationale Veröffentlichungsnummer: WO9737742

(56) Entgegenhaltungen:
- EP-A- 0 073 381
- EP-A- 0 432 651
- DE-A- 3 915 930
- DE-A- 4 227 962
- DE-A- 4 302 793

## Beschreibung

Die Erfindung bezieht sich auf die Extraktion organischer Verbindungen aus wäßrigen Lösungen nichtionischer Tenside.

Organische Schadstoffe liegen im Boden als flüssige oder feste Phase bzw. an Bodenpartikel gebunden (adsorbiert) vor. Zwecks Bodensanierung können diese organischen Verbindungen (Schadstoffe) mittels wäßriger, tensidhaltiger Lösungen aus Böden herausgewaschen werden. Als Folge derartiger Vorgänge liegen z.B. wäßrige Lösungen nichtionischer Tenside vor, in denen organische Verbindungen gelöst sind. Um die Lösungen nichtionischer Tenside wiederverwenden zu können, ist eine Extraktion der organischen Verbindungen aus wäßrigen, tensidhaltigen Lösungen erforderlich. Aus Druckschrift "J.L: Underwood, K.A. Debelak, D.J. Wilson, Sep. Sci. Technol. 1993, 28(9), 1647-1669 Soil Clean Up by in-situ Surfactant Flushing. VI Reclamation of Surfactant for Recycle" ist die Extraktion organischer Substanzen (Verbindungen) aus Lösungen ionischer Tenside über Flüssig-Flüssig-Extraktion bekannt. Es wird explizit darauf hingewiesen, daß eine Extraktion mittels Flüssig-Flüssig-Extraktion möglich ist, weil ausschließlich Lösungen ionischer Tenside - nicht aber Lösungen nichtionischer Tenside - eingesetzt worden sind.

Der Fachwelt ist bekannt, daß nichtionische Tenside die Bildung von Emulsionen stark fördern. Ferner ist der Fachwelt bekannt, daß die Auftrennung solcher Emulsionen nicht möglich oder zumindest sehr aufwendig ist. Die Emulsionsbildung wirkt sich bekanntermaßen nachteilhaft auf Flüssig-Flüssig-Extraktionen aus. Aus diesem Grund ist die Flüssig-Flüssig-Extraktion gemäß vorgenanntem Stand der Technik nur für Lösungen ionischer Tenside für möglich gehalten worden.

Daß trotz der bekannten starken Emulsionsbildung und den damit verbundenen großen Schwierigkeiten eine Flüssig-Flüssig-Extraktion nichtionischer Tenside aus Lösungen dennoch grundsätzlich für durchführbar gehalten wird, ist der Druckschrift "K. Bonkhoff, M. Wittmann, F.-H. Haegel, G. Subklew "Extraktion von polyzyklischen aromatischen Kohlenwasserstoffen aus belasteten Böden" in: Fremdstoffe in Böden - Akkumulation, Bioverfügbarkeit, Bewertungsansätze Herausgeber: Arbeitsgemeinschaft der Großforschungseinrichtungen (AGF) AGF, Bonn, 1994, 34-36" zu entnehmen. Aus dieser Druckschrift ist jedoch nicht bekannt, wie eine solche Flüssig-Flüssig-Extraktion von organischen Verbindungen aus Lösungen nichtionischer Tenside möglich und ob ein solches Verfahren wirtschaftlich durchführbar ist.

Aus EP 0 432 651 A1 sowie aus DE 39 15 930 ist die Extraktion von Schadstoffen mit pflanzlichen Ölen bekannt. Eine (Rück-)Gewinnung von Lösungen nichtionischer Tenside ist diesen Druckschriften nicht zu entnehmen.

Aufgabe der Erfindung ist die Schaffung eines wirtschaftlich durchführbaren Verfahrens zur Extraktion organischer Verbindungen aus Lösungen nichtionischer Tenside, welches insbesondere hohe Durchsätze ermöglicht.

Die Aufgabe wird durch ein Verfahren mit den Merkmalen des Hauptanspruchs gelöst. Vorteilhafte Ausgestaltungen ergeben sich aus den rückbezogenen Ansprüchen.

Die wäßrige Lösung nichtionischer Tenside (die die zu extrahierenden organischen Verbindungen enthält) wird mit einer Flüssigkeit intensiv durchmischt, die nicht mit Wasser mischbar ist.

Unter Durchmischung ist eine Art Verwirbelung, also die Herstellung eines Gemenges der beiden Flüssigkeiten zu verstehen. Da diese nicht miteinander mischbar sind, entsteht ein Gemenge, d. h. keine homogene Mischung. Eine homogene Mischung wäre entstanden, wenn miteinander mischbare Flüssigkeiten eingesetzt worden wären. Unter intensiver Durchmischung ist eine Durchmischung zu verstehen, bei der eine große Grenzfläche zwischen den beiden Flüssigkeiten hergestellt worden ist. Unter großer Grenzfläche ist eine Grenzfläche zu verstehen, wie sie typischerweise bei einer Durchmischung entsteht, die mittels eines Zentrifugalextraktors bewirkt wird. Bei einer intensiven Durchmischung beträgt die Teilchengröße der dispersen Phase in dem Gemenge typischerweise 0,1 bis 10 µm.

Im Vergleich hierzu ist unter geringer Durchmischung eine Durchmischung zu verstehen, die in einer einfachen Extraktionssäule typischerweise bewirkt wird, bei der eine Phase die andere durchströmt. Bei einer geringen Durchmischung beträgt die Teilchengröße der dispersen Phase typischerweise 100 µm bis 10 mm.

Infolge der großen Grenzfläche treten die organischen Verbindungen mit hoher Durchtrittsrate aus der tensidhaltigen, wäßrigen Lösung in die nicht mit Wasser mischbare Flüssigkeit hinein.

Anschließend wird die tensidhaltige, wäßrige Lösung wieder von der nicht mit Wasser mischbaren Lösung getrennt. Die nicht mit Wasser mischbare Lösung enthält nun die organischen Verbindungen. Die Extraktion ist somit vollzogen.

Als nicht mit Wasser mischbare Flüssigkeit eignet sich insbesondere ein (pflanzliches) Öl oder Fettsäureester.

Aufgrund der intensiven Durchmischung wird die Bildung von Emulsionen über das normale Maß hinaus weiter gesteigert. Infolge des allgemeinen Fachwissens sowie in Kenntnis des vorgenannten Standes der Technik war zu erwarten, daß aufgrund der gesteigerten Bildung von Emulsionen nun praktisch keine Trennung mehr möglich sein würde. Überraschend wurde festgestellt, daß die Vorteile einer intensiven Durchmischung die Nachteile, die erwartet werden mußten, deutlich überwiegen.

Infolge der intensiven Durchmischung wird vorteilhaft eine hohe Extraktionsleistung bewirkt. Die mögliche hohe Extraktionsleistung hat zur Folge, daß das Verfahren wirtschaftlich durchführbar ist. Die Trennung der intensiv durchmischten Flüssigkeiten ist wirtschaftlich mittels Zentrifugation durchführbar.

Ein solches Verfahren ist dann wirtschaftlich durchführbar, wenn die Grenzflächenspannung zwischen wäßriger Lösung und organischer Phase (organische Verbindung) von 1 mN pro m an aufwärts auftritt. Vorteilhaft beträgt die Grenzflächenspannung mindestens 1,5 (insbesondere mindestens 2) mN pro m.

Ein Zentrifugalextraktor wird vorteilhaft für die Durchführung des Verfahrens vorgesehen. In einem Zentrifugalextraktor wird zunächst eine wäßrige Lösung nichtionischer Tenside mit z. B. einem Fettsäureester durchmischt. Nach Durchmischung der beiden Flüssigkeiten werden die beiden Phasen des nun entstandenen Gemenges (Emulsion) durch Zentrifugation wieder getrennt. Genügend hohe Grenzflächenspannungen im Zusammenhang mit einer wäßrigen Lösung weisen insbesondere Alkylpolyglykolether mit ausreichendem Ethoxylierungsgrad auf. Die unter dem Handelsnamen Marlipal 24/100 bis 24/200 bekannten Alkylpolyglykolether der Firma Hüls erfüllen die vorgenannte Spezifikation.

Bei einer weiteren Ausgestaltung der Erfindung wird eine teilweise Kreislaufführung der nicht mit Wasser mischbaren Flüssigkeit durchgeführt. Nach der Trennung wird ein Teil der durch das Verfahren belasteten mit unbelasteter, nicht mit Wasser mischbarer Flüssigkeit angereichert. Diese Mischung wird dann für den Schritt der intensiven Durchmischung eingesetzt. Hierdurch wird Wirtschaftlichkeit und Umweltfreundlichkeit des Verfahrens weiter gesteigert.

Vorteilhaft wird das Verfahren mit einer Öl-in-Wasser-Mikroemulsion (O/W-µE) durchgeführt, die als wäßrige Lösung nichtionischer Tenside eingesetzt wird. Unter Öl-in-Wasser-Mikroemulsion sind thermodynamisch stabile Mischungen aus Wasser, nichtionischen Tensiden und der mit Wasser nicht mischbaren Flüssigkeit zu verstehen, die verfahrensgemäß zur Flüssig-Flüssig-Extraktion verwendet wird. Der Anteil der mit Wasser nicht mischbaren Flüssigkeit in der Mischung ist so bemessen, daß sich die Mischung thermodynamisch stabil verhält. Aus dieser Öl-in-Wasser-Mikroemulsion werden dann verfahrensgemäß organische Verbindungen extrahiert. Bei Verwendung von Öl-in-Wasser-Mikroemulsionen können die extrahierten O/W-µE vorteilhaft ohne weitere Aufbereitungsschritte wiederverwendet werden.

Z. B. können mittels einer Öl-in Wasser-Mikroemulsion organische Verbindungen (Schadstoffe) z. B. zwecks Bodensanierung aus Böden herausgewaschen werden. Anschließend wird verfahrensgemäß die Öl-in-Wasser-Mikroemulsion von den Schadstoffen befreit. Sie kann dann ohne weiteres wieder - z. B. für die Bodensanierung - eingesetzt werden.

Das beanspruchte Verfahren ist sowohl zur Gewinnung von Wertstoffen aus tensidhaltigen Lösungen als auch zur Abtrennung unerwünschter Nebenbestandteile, z.B. von Schadstoffen aus der in-situ-Bodenwäsche geeignet.

Im folgenden wird die Erfindung anhand von Beispielen näher erläutert.

Eine Lösung von 29 mg l⁻¹ Pyren in einer Öl-in-Wasser-Mikroemulsion (O/W-µE) mit 1 % Marlipal 24/200, gesättigt mit Rapsmethylester, wurde mit reinem Rapsmethylester mittels eines Zentrifugalextraktors LX 124 der Firma Robatel extrahiert. Die Grenzflächenspannung zwischen tensidhaltiger Lösung und Rapsmethylester betrug 1,78 mN pro m. Der Durchfluß für die O/W-µE betrug 3 l h⁻¹. Das Verhältnis der Durchsätze von O/W-µE und Öl betrug 10:1. Die Pyrenkonzentration in der O/W-µE konnte auf unter 1,3 mg l⁻¹, d.h. 4,5 % der Ausgangskonzentration gesenkt werden.

Organische Verbindungen, die in wäßrigen Lösungen ausreichend hydrophiler nichtionischer Tenside bzw. in Öl-in-Wasser-Mikroemulsionen (O/W-µE) solubilisiert oder dispergiert vorliegen, konnten mit pflanzlichen Ölen oder deren Estern, z.B. Rapsmethylester (RME) aus der wäßrigen tensidhaltigen Phase extrahiert werden. Unter O/W-µE sind dabei thermodynamisch stabile Mischungen von Tensiden, einer nicht mit Wasser mischbaren Flüssigkeit und Wasser zu verstehen, in denen die organische Flüssigkeit dispers vorliegt. Bei der Flüssig-Flüssig-Extraktion treten die organischen Verbindungen weitgehend in die organische Phase über. Vorteilhaft konnten die tensidhaltigen Lösungen bzw. O/W-µE umweltfreundlich wiederverwendet werden.

Voraussetzung für eine wirtschaftliche Verfahrensweise sind eine effektive Extraktion der solubilisierten oder dispergierten Substanzen, eine geringe Coextraktion des Tensides und ein möglichst hoher Durchsatz. Diese Vorteile werden mittels des Verfahrens erzielt. Hervorzuheben ist insbesondere der hohe Durchsatz, der bei der erfindungsgemäßen Verwendung eines Zentrifugalextraktors möglich ist.

Anwendungsfelder sind insbesondere die Extraktion von Schadstoffen aus der Bodenwäsche und die Isolierung von organischen Syntheseprodukten.

Der eingesetzte Zentrifugalextraktor wird kommerziell vertrieben und für Flüssig-Flüssig-Extraktionen genutzt. Der Einsatz des Gerätes zur Extraktion tensidhaltiger Lösungen und die anschließende Wiederverwendung dieser Lösungen wurde jedoch aus vorgenannten Gründen noch nicht in Erwägung gezogen. Das besondere Problem bei tensidhaltigen Lösungen, insbesondere bei der Verwendung nichtionischer Tenside, liegt - wie erläutert - in der Bildung von Emulsionen, die durch die intensive Durchmischung im Zentrifugalextraktor besonders kritisch ist. So erwies sich die Extraktion von 5%-igen Lösungen des Tensids Marlipal 24/70, einem Alkylpolyglykolether mit C₁₂- und C₁₄-Alkylketten und durchschnittlich 7 Ethylenoxideinheiten, als nicht möglich. Die bei der Extraktion erhaltenen Emulsionen konnten nicht in eine Öl- und Wasserphase getrennt werden. Überraschenderweise ist die Abhängigkeit der Emulsionsbildung und -stabilität von der Hydrophilie des Tensides aber so stark, daß für eine 1%-ige Lösung des Tensids Marlipal 24/200, einem Alkylpolyglykolether mit C₁₂- und C₁₄-Alkylketten und durchschnittlich 20 Ethylenoxideinheiten eine ausgezeichnete Extraktion der Schadstoffe und eine gute Trennung der Phasen erreicht werden konnte. Die Extraktion war sehr viel besser als in einer Extraktionssäule. Insbesondere der Durchsatz war wesentlich höher.

Als Kriterium für die Wahl des Tensides kann die Grenzflächenspannung zwischen der tensidhaltigen Lösung und der organischen Phase dienen. Ca. 1 mN m⁻¹ hat sich als ausreichend herausgestellt.

Extraktionen von 5%-igen Marlipal-24/70- und Marlipal-24/200-Lösungen mit Hilfe einer Extraktionssäule ergaben bei wesentlich geringeren Durchsätzen von 210 bzw. 270 ml min⁻¹ schlechtere Extraktionsergebnisse. Die Restgehalte an Pyren lagen stets über 7% der Ausgangskonzentration in der O/W-µE.

## Patentansprüche

1. Verfahren zur Extraktion organischer Verbindungen aus wäßrigen Lösungen, die nichtionische Tenside enthalten, mit den Schritten:
- intensive Durchmischung der wäßrigen Phase mit einer nicht mit Wasser mischbaren Flüssigkeit, wobei die gebildete disperse Phase Teilchengrößen zwischen 0,1 µm und 10 µm aufweist;
- Trennung der durchmischten Lösungen durch Zentrifugation;
- die Grenzflächenspannung zwischen der wäßrigen und der nicht mit Wasser mischbaren Flüssigkeit beträgt wenigstens 1 mN/m.

2. Verfahren zur Extraktion organischer Verbindungen aus wäßrigen Lösungen, die nichtionische Tenside enthalten, nach vorhergehendem Anspruch, bei dem die Durchmischung und Trennung mittels Zentrifugalextraktor durchgeführt wird.

3. Verfahren zur Extraktion organischer Verbindungen aus wäßrigen Lösungen, die nichtionische Tenside enthalten, nach einem der vorhergehenden Ansprüche, bei dem die nicht mit Wasser mischbare Flüssigkeit nach der Trennung zumindest teilweise für die Durchmischung wiederverwendet wird.

4. Verfahren zur Extraktion organischer Verbindungen aus wäßrigen Lösungen, die nichtionische Tenside enthalten, nach einem der vorhergehenden Ansprüche, bei dem als wäßrige Lösung, die nichtionische Tenside enthält, eine Öl-in-Wasser-Mikroemulsion vorgesehen ist.

## Claims

1. A method of extracting organic compounds from aqueous solutions which contain non-ionic surfactants, comprising the steps:
- intensive inter-mixing of the aqueous phase with a liquid which is immiscible with water, wherein the disperse phase which is formed comprises particle sizes between 0.1 µm and 10 µm;
- separation of the inter-mixed solutions by centrifugation;
- the interfacial tension between the aqueous liquid and the liquid which is immiscible with water is at least 1mN/m.

2. A method of extracting organic compounds from aqueous solutions which contain non-ionic surfactants according to the preceding claim, wherein inter-mixing and separation are effected by means of a centrifugal extractor.

3. A method of extracting organic compounds from aqueous solutions which contain non-ionic surfactants according to either one of the preceding claims, wherein at least part of the liquid which is immiscible with water is re-used for inter-mixing after separation.

4. A method of extracting organic compounds from aqueous solutions which contain non-ionic surfactants according to any one of the preceding claims, wherein an oil-in-water microemulsion is provided as the aqueous solution which contains non-ionic surfactants.

## Revendications

1. Procédé d'extraction de composés organiques à partir de solutions aqueuses qui contiennent des agents tensio-actifs non ioniques, comprenant les étapes suivantes :
- mélange intensif de la phase aqueuse avec un liquide non miscible avec l'eau, la phase dispersée formée présentant des tailles de particules comprises entre 0,1 µm et 10 µm ;
- séparation des solutions mélangées par centrifugation ;
- la tension interfaciale entre la solution aqueuse et le liquide non miscible avec l'eau est d'au moins 1 mN/m.

2. Procédé d'extraction de composés organiques à partir de solutions aqueuses qui contiennent des agents tensio-actifs non ioniques selon la revendication précédente, dans lequel on effectue le mélange et la séparation au moyen d'un extracteur centrifuge.

3. Procédé d'extraction de composés organiques à partir de solutions aqueuses qui contiennent des agents tensio-actifs non ioniques selon l'une des revendications précédentes, dans lequel, après la séparation, le liquide non miscible avec l'eau est réutilisé au moins en partie pour l'opération de mélange.

4. Procédé d'extraction de composés organiques à partir de solutions aqueuses qui contiennent des agents tensio-actifs non ioniques selon l'une des revendications précédentes, dans lequel il est prévu une micro-émulsion huile dans eau en tant que solution aqueuse qui contient des agents tensio-actifs non ioniques.
